# EUROPEAN PATENT SPECIFICATION

(11) **EP 2 855 535 B1**
(45) Date of publication and mention of the grant of the patent: **06.03.2019**
(21) Application number: 12745483.3
(22) Date of filing: 03.08.2012
(51) Int. Cl.: C08B 37/00, C04B 24/38, C04B 28/04, C04B 28/14

(54) **HYDRAULIC BINDER COMPOSITION**
HYDRAULISCHE BINDEMITTELZUSAMMENSETZUNG
COMPOSITION DE LIANT HYDRAULIQUE

(30) Priority: 28.05.2012 IT VA20120014
(43) Date of publication of application: 08.04.2015
(73) Proprietor: Lamberti SpA, 21041 Albizzate (IT)
(72) Inventor: BIASOTTI, Barbara, I-21013 Gallarate (IT); GIUDICI, Max, I-22074 Lomazzo (IT); PFEIFFER, Ugo, I-20149 Milano (IT); LANGELLA, Valentina, I-20155 Milano (IT); COAREZZA, Roberto, I-21040 Castronno (IT); FLORIDI, Giovanni, I-28100 Novara (IT); LI BASSI, Giuseppe, I-21026 Gavirate (IT)
(74) Representative: Giaroni, Paola
(86) International application number: PCT/EP2012/065290
(87) International publication number: WO 2012/127067

(56) References cited:
- EP-A1- 0 824 093
- EP-A1- 1 264 808
- EP-A2- 2 236 475
- US-A- 3 326 890
- US-A- 4 870 167

## Description

### FIELD OF THE INVENTION

The present invention relates to dry compositions comprising a hydraulic binder, such as cement or gypsum, and a water retention agent which is a highly substituted C₂-C₄ hydroxyalkyl galactomannan with average D-mannosyl to D-galactosyl unit ratio different from 2:1, that preferably comprises a linear or branched C₆-C₂₂ alkyl chain.

### BACKGROUND OF THE ART

It is well known to use hydraulic binder compositions in the construction field for making the infrastructure of buildings, works of art, apartment buildings or articles such as paving slabs or boards and tiles, and as adhesives or jointing compositions, particularly to adhere tiles or ceramics in general, vertically or horizontally, to plane surfaces of different kinds, such as to concrete, plywood or brick surfaces.

In the present text with the term "hydraulic binders" we designate mineral substances that in the presence of water harden because of hydration chemical reactions and can bind other materials together.

Hydraulic binder compositions that mainly consist of cement mixed with a variable amount of sand and possibly gypsum are generally used to prepare tile adhesives, mortars, concrete, cement plaster, finiture plaster, self-levelling flooring; hydraulic binder compositions based on gypsum are generally used to prepare gypsum plasters and joint compounds.

Immediately prior to use, a proper amount of water is added to the dry hydraulic binder composition, making it a workable paste and allowing the shaping of articles or the application on various surfaces.

The curing of the thus obtained hydraulic binder paste (from now on "paste"), also commonly referred to as "setting", begins as soon as the composition is admixed with water and will result in its complete hardening and its exhibiting the necessary physical and mechanical features.

Setting is a rather complex chemical process that leads to polymeric inorganic structures whose strong reciprocal interactions result in the formation of solid and strong masses.

In the setting process, many features are of importance and influence not only the speed at which setting occurs but also its final effectiveness, i.e. its strength.

Among these features of fundamental importance are the content of water and the capability of the composition to retain the proper amount of water during the whole setting process. It is important that the paste retains sufficient water until all the desired physical characteristics are obtained.

In practice, most of the surfaces onto which pastes are generally applied are porous and absorbent and they absorb water from the paste in the area of contact, thus creating defects in the setting which may at some point in time result in defects of the adhesion and of the mechanical properties of the hardened composition.

Another problem that may be encountered during the application of pastes that is related to the capability of the paste to retain the proper amount of water during the whole setting process is a too rapid hardening that prevents the adjustment of the laid strata or of the shaped articles. This problem is called "lack of open time" and/or "lack of adjustability time".

Yet another problem occurs when the content of water becomes excessive, even if only locally or because of a lack of homogeneity of mixing. In such cases, setting becomes too slow due to a too flowing mixture, working time grows longer and the resulting application becomes imprecise and difficult.

Another issue in the handling of pastes is the fact that water in the mixture acts as a lubricant for the solid particles when paste is spread on the surface of the object to which it is to be applied. The proper amount of water gives to the mixture the "pastiness" or "creaminess" suitable for a uniform, homogeneous and easy laying. The rheological characteristics of the final mixture are very important and they depend on the kind and on the amount of the different components in the mixture.

The rheology of a mixture of sand, cement and water alone, or of gypsum and water alone renders them unsuitable for use as pastes because of the lack of the above-mentioned characteristics, and more generally, because of their poor processing.

To overcome all these problems, additives are used in the formulation of hydraulic binder compositions acting as retention agents and rheology modifiers. These additives are generally synthetic or semi-synthetic polymers, usually chemically modified natural polymers, exhibiting the specific characteristic of bonding and coordinating a large amount of water once they are dissolved in water.

These products, and among these in particular cellulose ethers, are highly purified products whose preparation requires many sophisticated and complex purification steps. They are rather expensive products.

In literature many mixtures are described for use as rheology modifier and retention aid in pastes, such as in US 6,706,112 , US 4,028,127, EP 235513, US 5,432,215 and US 4,487,864.

In particular, US 6,706,112 discloses cementitious mortar additives including at least a hydroxyalkyl guar galactomannan, (a galactomannan with an average D-mannosyl to D-galactosyl unit ratio of about 2:1) having a molar substitution of from about 0.7 to about 3 which is able to impart to mortars very good water retention and an initial adhesion as good as the adhesion of mortars that include cellulose ethers.

EP 2236475 describes hydraulically setting building materials comprising C₂-C₄ hydoxyalkyl cassia galactomannan (a galactomannan with an average D-mannosyl to D-galactosyl unit ratio of about 5:1) with molar substitution from 0.1 to 0.6, preferably from 0.3 to 0.6.

WO2012/89530 relates to dry compositions comprising a hydraulic binder, such as cement or gypsum, and a water retention agent which is a highly substituted hydroxypropyl guar galactomannan derivative comprising an unsubstituted linear or branched C₆-C₈ alkyl chain.

Nonetheless, it would be desirable in the art of preparing cement and/or gypsum pastes to provide additives based on galactomannan which are different from guar, but give similar or improved water retention and workability properties.

It has now been found that highly substituted C₂-C₄ hydroxyalkyl galactomannans with an average D-mannosyl to D-galactosyl unit ratio different from 2:1, that preferably comprise a linear or branched C₆-C₂₂ alkyl chain, despite the relevant differences in the molecular structure and rheological characteristics of the starting galactomannan, all impart good water retention and processability to cement and/or gypsum pastes.

### SUMMARY OF THE INVENTION

In one aspect, the invention is a dry composition comprising a hydraulic binder and from 0.05 to 2.0 %wt of at least one compound which is a C₂-C₄ hydroxyalkyl galactomannan with an average D-mannosyl to D-galactosyl unit ratio different from 2:1 having C₂-C₄ hydroxyalkyl molar substitution from about 0.7 to about 3.

In another aspect, the invention is a hydraulic binder paste prepared by admixing a dry composition comprising a hydraulic binder and from 0.05 to 2.0 %wt of at least one compound which is a C₂-C₄ hydroxyalkyl galactomannan with average D-mannosyl to D-galactosyl unit ratio different from 2:1, having C₂-C₄ hydroxyalkyl molar substitution from about 0.7 to about 3, with from about 10 to about 85 parts by weight of water each 100 parts by weight of the dry composition.

According to another aspect, an object of the invention are 2-hydroxypropyl-2-hydroxy-3-(2-ethylhexyloxy) propyl galactomannans with an average D-mannosyl to D-galactosyl unit ratio different from 2:1 having hydroxyalkyl molar substitution from 0.7 to 3.0 and alkyl degree of substitution from 0.005 to 0.10.

### DETAILED DESCRIPTION OF THE INVENTION

The C₂-C₄ hydoxyalkyl galactomannan with average D-mannosyl to D-galactosyl unit ratio different from 2:1 are derivatives of renewable raw material substrates, which are desirable as replacements for the guar galactomannan products now in use.

Guar galactomannan is a polysaccharide belonging to the family of galactomannans and is extracted from a leguminosae, "Cyamopsis Tetragonolobus", that grows in the semi-dry region of tropical countries, particularly in India and in Pakistan and has D-mannosyl to D-galactosyl unit ratio of about 2:1.

Like for many other raw materials deriving from agricultural production, guar price and availability undergo cyclic fluctuation. As a consequence it is highly desirable to provide alternatives to its use.

Galactomannan with average D-mannosyl to D-galactosyl unit ratio different from 2:1 are commercially available.

The galactomannan from tara (tara gum) has average ratio of D-mannosyl to D-galactosyl units of approximately 3:1, the one from locust bean (locust bean gum) has a ratio of about 4:1, the one from cassia (cassia gum) of about 5:1 and the galactomannan from fenugreek (fenugreek gum) of about 1:1.

Tara gum is obtained from the kernels of the tara shrub *Caesalpinia spinosa*, sometimes referred to as *Caesalpinia tinctoria* or *Caesalpinia pectinata.* This legume is native of northern regions of Africa and South America. Peru is the primary source of tara gum.

In tara gum the nature of D-galactosyl distribution along the mannan chain has not been fully elucidated, although its rheologic behaviour, and in particular its synergy with xanthan gum, suggests a certain degree of block structure of the galactose substitution.

Locust bean gum (or carob gum) is the refined endosperm of the seed of the carob tree, which is known botanically as *Ceratonia siliqua L.* The tree mainly grows in Mediterranean countries.

Locust bean gum has fewer D-galactosyl side groups than does tara gum, with a D-mannosyl to D-galactosyl unit ratio averaging about 4:1.

The D-galactosyl side groups are clustered in blocks of about 25, thus creating long regions of unsubstituted mannan backbone.

This peculiar structure is believed to account for the relevant differences in properties between guar gum and locust bean gum.

By way of example, differently from guar, locust bean gum is only slightly soluble in cold water.

Cassia gum derives from the endosperm of *Cassia obtusifolia* also known as *Senna obtusifolia* or *Cassia tora.*

*Cassia obtusifolia*, Caesalpiniaceae, is a wild crop and grows in most parts of India as a weed.

Cassia grows in hot, wet, tropical climates both wild and commercially. Cassia gum is not soluble in cold water and it forms low viscosity solutions in water only by swelling in water after it is heated.

On the other hand, fenugreek gum is soluble in cold water but provides aqueous solutions with relatively low viscosities too.

Fenugreek gum is a galactomannan extracted from the seeds of fenugreek plant (*Trigonella foenum-graecum*),

Fenugreek is an erect annual herb of the bean family that is indigenous to western Asia and southeastern Europe.

The different characteristics of the above described galactomannans appear in the following table:

| | *Approx. D-mannosyl to D-galactosyl unit ratio* | *Solubility in water at 25°C (1% wt)* | *Solubility in water at 85°C (1% wt)* | *Viscosity 7% wt in water** *(mPa.s)* |
|---|---|---|---|---|
| **Fenugreek gum** | 1:1 | complete | complete | 1850 |
| **Guar gum** | 2:1 | complete | complete | 5000 |
| **Tara gum** | 3:1 | 80% | complete | 5800 |
| **Locust bean gum** | 4:1 | 15% | complete | 2940 |
| **Cassia gum** | 5:1 | Non soluble | complete | 150 |

| | | | | |
|---|---|---|---|---|
| * Brookfield® viscosity at 20 rpm, 20°C after complete dissolution | | | | |

For the realization of the compositions of the present invention, the preferred C₂-C₄ hydroxyalkyl galactomannans with average D-mannosyl to D-galactosyl unit ratio different from 2:1 are hydroxypropyl galactomannans. Accordingly, the dry composition of the invention may advantageously comprise from 0.05 to 2.0 %wt of at least one compound which is a hydroxypropyl derivative of tara gum, locust bean gum, cassia gum or fenugreek gum, provided that the hydroxypropyl molar substitution is from about 0.7 to about 3.

Although guar gum, tara gum, locust bean gum, cassia gum and fenugreek gum all belong to the galactomannan family, each of them show a peculiar rheology and even different solubility in water. Nonetheless, it has surprisingly been found that they are all suitable for the preparation of highly substituted C₂-C₄ hydroxyalkyl derivatives, in particular of hydroxypropyl derivatives, that can be used as rheology modifiers and water retention aids in building compositions comprising hydraulic binders.

The performances of the corresponding lowly substituted C₂-C₄ hydroxyalkyl galactomannan derivatives, in particular of the hydroxypropyl derivatives, are remarkably improved for all gums derivatives, that are therefore interchangeable with one another, this providing for all of them a unique process for their preparation.

The hydroxypropyl galactomannan with an average D-mannosyl to D-galactosyl unit ratio different from 2:1 having hydroxypropyl molar substitution from about 0.7 to about 3 may be obtained by reacting the corresponding galactomannan with propylene oxide under basic conditions.

Basically, the process used for the preparation of highly substituted hydroxyropyl guar galactomannan can be used for their preparation too.

The C₂-C₄ hydroxyalkyl galactomannans useful for the present invention preferably have C₂-C₄ hydroxyalkyl molar degree of substitution (MS_{HA}) from 1.0 to 2.5.

For the purposes of the present invention, the C₂-C₄ hydroxyalkyl molar degree of substitution, that is the average number of moles of C₂-C₄ hydroxyalkyl groups linked per monosaccharidic unit, is abbreviated "MS_{HA}" and is determined by ¹H-NMR (effective molar substitution).

Advantageously, the hydroxypropyl galactomannans with an average D-mannosyl to D-galactosyl unit ratio different from 2:1 of the invention further comprise linear or branched C₆-C₂₂ alkyl chains with alkyl degree of substitution (DS_{Ak}) from 10⁻⁵ to 0.10.

For the purposes of the present invention, the C₆-C₂₂ alkyl degree of substitution, that is the average number of moles of unsubstituted linear or branched C₆-C₂₂ alkyl chains linked per monosaccharidic unit, is abbreviated "DS_{Ak}" and is also determined by ¹H-NMR (effective degree of substitution).

The linear or branched C₆-C₂₂ alkyl chains may be introduced by reacting the hydroxypropyl galactomannan derivative with a linear or branched C₆-C₂₂ alkyl halide, or with a linear or branched C₈-C₂₄ 1,2 epoxide, or with a linear or branched C₆-C₂₂ alkyl glycidyl ether, obtaining respectively an alkyl ether derivative, a hydroxyalkyl ether derivative and a 2-hydroxy-3-(alkyloxy) propyl ether derivative.

Particularly preferred for use as water retention agents in compositions comprising a hydraulic binder are hydroxypropyl galactomannans comprising C₆-C₈ alkyl chains and DS_{Ak} from 0.005 to 0.1; hydroxypropyl galactomannan comprising n-hexyl chains or 2-ethylhexyl chains, and especially 2-hydroxypropyl-2-hydroxy-3-(2-ethylhexyloxy) propyl galactomannans, are the most preferred.

Another advantage of the use of the hydroxyalkyl galactomannans of the present invention is the fact that they can be used in crude form as they guarantee good performances without the need of a purification step after their preparation, and, as a consequence, they are obtainable at a substantially low factory cost.

The dry compositions of the present invention generally contain from 5 to 80 % by weight of cement and/or gypsum as the hydraulic binder; preferably, in case the hydraulic binder is gypsum, the amount of hydraulic binder is from 40 to 80% by weight, while in case the hydraulic binder is cement, its amount ranges from 5 to 60% by weight.

The cement may be Portland cement or a Portland cement blend or a non-Portland hydraulic cement, such as calcium aluminate cement, calcium sulfoaluminate cement, pozzolan lime cement.

Preferred cements are Portland cement and Portland cements blends (by way of example, slag Portland cement, pozzolan Portland cement, fly ash Portland cement, blastfurnace Portland cement and all the Portland cement blends defined in standard EN 197-1 A3).

The gypsum may be calcium sulphate hemihydrate or anhydrite, most preferably is calcium sulphate hemihydrate.

Dry compositions comprising cement mixed with a variable amount of sand and possibly gypsum serve as the base materials for producing mortars, grouts, concrete, tile adhesives, cement plaster, finiture plaster, self-levelling flooring. Cement based dry hydraulic binder compositions may also be reinforced with fibres for the manufacture of fibrocements used, for example, as a material for making articles for covering roofs, pipework or tanks.

Dry compositions based on gypsum are used to prepare gypsum plasters, joint compounds, gypsum mortars and grouts.

Typical additional ingredients of cement based dry hydraulic binder compositions are fine and coarse aggregates (sand and/or gravel).

Beside cement and/or gypsum, water retention agent and possibly aggregates, there are several other additives that can be added to the hydraulic binder composition of the invention before or during mixing with water.

Organic polymeric binders are typical additional ingredients of hydraulic binder compositions for tile adhesives, joints compounds and self-levelling floorings; calcium carbonate is usually present in gypsum and cement mortars and plasters, in joint compounds and self levelling flooring compositions.

Other chemical additives that may be present are usually classified according to their function; they act as air-entraining, water-reducing, retarding, accelerating, plasticizers and superplasticizers aids.

Other varieties of additives fall into the specialty category, whose functions include corrosion inhibition, shrinkage reduction, workability enhancement, bonding, damp proofing, and colouring.

Hydraulic binder pastes may be prepared from the above described dry compositions, by adding gradually the dry composition to water and mixing.

The correct amount of water is the one that allows to obtain the paste in the form of a uniform slurry that has good workability.

Normally this amount ranges from about 10 to about 85 parts by weight of water per 100 parts by weight of dry composition, and preferably from about 10 to about 45 parts by weight per 100 parts by weight of dry composition when the hydraulic binder is cement, from 35 to 80 parts by weight per 100 parts by weight of dry composition when the hydraulic binder is gypsum.

### EXAMPLES

Preparation of the water retention agents.

### Preparation of a 2-hydroxypropyl galactomannan with average D-mannosyl to D-galactosyl unit ratio about 1:1

In a 5 litres stirred reactor, 600 g of fenugreek gum are loaded at room temperature, the reactor is purged with nitrogen and, under vigorous stirring, a solution of 21 g NaOH in 175 g of water is added. The stirring is continued for 15 minutes at room temperature.

After a new purge with nitrogen 410g of propylene oxide are added while stirring for 6 hours at 65-70°C.

The reaction mixture is cooled at 40° C and neutralised by addition of acetic acid to pH about 5-6.5.

The thus obtained reaction mixture is dried on a fluid bed drier using hot air until the moisture content is about 3% by weight, milled and analysed.

The obtained product (HPF_{H}) has MS_{HP} = 1.5

### Preparation of a 2-hydroxypropyl-2-hydroxy-3-(2-ethylhexyloxy) propyl galactomannan with average D-mannosyl to D-galactosyl unit ratio about 5:1

In a 5 litres stirred reactor, 600 g of cassia gum are loaded at room temperature, the reactor is purged with nitrogen and, under vigorous stirring, a solution of 24 g NaOH in 240 g of water/isopropanol is added. The stirring is continued for 15 minutes at 20°C temperature; 30 g of 2-ethyl-hexyl glycidyl ether diluted in isopropanol (40g) are added and the mixture is stirred over 15min.

After a new purge with nitrogen 400g of propylene oxide are added while stirring for 6 hours at 65-70°C.

The reaction mixture is cooled at 40° C and neutralised by addition of acetic acid to pH about 5-6.5.

The isopropanol is distilled off in vacuum for 20 minutes

The thus obtained reaction mixture is dried on a fluid bed drier using hot air until the moisture content is about 3% by weight, milled and analysed.

The obtained product (EEHPC_{H}) has DS_{Ak} = 0.035 and MS_{HP} = 1.6.

Analogously, the other water retention agents (WRA) reported in Table 1 were prepared.

The RVT Brookfield ® viscosities (V_{B}) of the water retention agents are measured in aqueous solutions at 2 % by weight (WRA

No.1,2,4,5,7,8,9,10,11,13) or at 1% by weight (WRA No.3,6,12, 14), at 20°C and 20 rpm, and are reported in Table 1.

In the following tables HPF, HPG, HPC e HPT respectively stand for the hydroxypropyl derivatives of fenugreek, guar gum, cassia gum and tara gum; EHHPF, EHHPG, EHHPC, EHHPT respectively stand for the 2-hydroxypropyl-2-hydroxy-3-(2-ethylhexyloxy) propyl derivatives of fenugreek, guar gum, cassia gum and tara gum; H and L refer to the degree of hydroxypropyl substitution, H means "high", L means "low".

**Table 1**

| WRA No. | WRA Identity | MS_{HP} | DS_{Ak} | V_{B},(mPa_{*}s) |
|---|---|---|---|---|
| 1 | HPF_{H} | 1.5 | | 2620 |
| 2* | HPF_{L} | 0.2 | | 7600 |
| 3 | EHHPC_{H} | 1.6 | 0.035 | 200 |
| 4 | HPC_{H} | 1.5 | | 3960 |
| 5* | HPC_{L} | 0.2 | | 700 |
| 6 | EHHPF_{H} | 1.6 | 0.033 | 260 |
| 7* | HPC_{L} | 0.3 | | 2020 |
| 8 | HPC_{H} | 1.73 | | 2640 |
| 9 | HPT_{H} | 1.7 | | 7450 |
| 10* | HPT_{L} | 0.42 | | 18150 |
| 11* | HPT_{L} | 0.15 | | 27900 |
| 12 | EHHPT_{H} | 1.7 | 0.031 | 530 |
| 13* | HPG_{H} | 1.7 | | 8500 |
| 14* | EHHPG_{H} | 1.7 | 0.031 | 1280 |

| | | | | |
|---|---|---|---|---|
| * comparative | | | | |

### Application tests

The application tests were done to determine the water retention properties and consistency of compositions comprising the water retention agents of the Examples.

The methods used in the application tests are the following:
Water Retention (WR) is measured according to standard test method ASTM C1506-09. Consistency (C) is measured according to standard test method ASTM C230/230M-08.

The tests were performed both on a cement plaster composition and on two gypsum plaster compositions.

The cement plaster composition comprising Portland cement as the hydraulic binder was prepared by adding 19 parts by weight of water and 0.1 parts by weight of WRA per 100 parts by weight of dry mix (Holcim Cement 32.5R IN 8-11 12 %wt, calcium hydroxide 3 %wt, Mg/Ca carbonate 85 %wt).

The results are reported in Table 2.

**Table 2 - Cement plaster**

| **WRA No.** | **WRA Identity** | **WR (%)** | **C(mm)** |
|---|---|---|---|
| 1 | HPF_{H} | 79.8 | 163 |
| 2* | HPF_{L} | 56.5 | 174 |
| 3 | EHHPC_{H} | 81.5 | 170 |
| 4 | HPC_{H} | 77 | 163 |
| 5* | HPC_{L} | 55 | 188 |
| 6 | EHHPF_{H} | 81.4 | 169 |
| 7* | HPC_{L} | 55 | 159 |
| 8 | HPC_{H} | 74.4 | 176 |
| 9 | HPT_{H} | 77.8 | 163 |
| 10* | HPT_{L} | 55 | 168 |
| 11* | HPT_{L} | 55 | 165 |
| 12 | EHHPT_{H} | 82.6 | 162 |
| 13* | HPG_{H} | 82.2 | 168 |

| | | | |
|---|---|---|---|
| * comparative | | | |

The plaster composition comprising synthetic gypsum as the hydraulic binder was prepared by adding 64 parts by weight of water and 0.25 parts by weight of WRA per 100 parts by weight of dry mix (gypsum 60 %wt, perlite 35 %wt, sand 5 %wt). The results are reported in Table 3

The plaster composition comprising natural gypsum as the hydraulic binder was prepared by adding 33 parts by weight of water, 0.12 parts by weight of WRA and 0.05 part by weight of set retarder per 100 parts by weight of dry mix (45 %wt siliceous sand and 55 %wt natural gypsum).

The results are reported in Table 4

**Table 3 - Synthetic Gypsum plaster**

| **WRA No.** | **WRA Identity** | **WR (%)** | **C(mm)** |
|---|---|---|---|
| 1 | HPF_{H} | 80 | 182 |
| 2* | HPF_{L} | n.d.¹⁾ | 195 |
| 3 | EHHPC_{H} | 81.2 | 181 |
| 4 | HPC_{H} | 77.4 | 179 |
| 5* | HPC_{L} | n.d¹⁾ | 182 |
| 6 | EHHPF_{H} | 83.8 | 163 |
| 7* | HPC_{L} | n.d¹⁾ | 183 |
| 8 | HPC_{H} | 79.2 | 183 |
| 9 | HPT_{H} | 86.1 | 176 |
| 10* | HPT_{L} | 78 | 184 |
| 11* | HPT_{L} | 76 | 195 |
| 12 | EHHPT_{H} | 85.5 | 182 |
| 13* | HPG_{H} | 87.5 | 172 |

| | | | |
|---|---|---|---|
| 1) not determinable * comparative | | | |

**Table 4 - Natural Gypsum plaster**

| WRA No. | **WRA Identity** | WR(%) | C(mm) |
|---|---|---|---|
| 1 | HPF_{H} | 90.3 | 144 |
| 4 | HPC_{H} | 91.1 | 141 |
| 8 | HPC_{H} | 87.4 | 169 |
| 14* | EHHPG_{H} | 91.4 | 176 |

| | | | |
|---|---|---|---|
| * comparative | | | |

The results show that highly substituted C₂-C₄ hydroxyalkyl galactomannan with average D-mannosyl to D-galactosyl unit ratio different from 2:1, preferably comprising an alkyl chain, are all excellent rheology modifiers and water retention agents for hydraulic binder compositions, both based on gypsum and on cement.

## Claims

1. Dry composition comprising a hydraulic binder and from 0.05 to 2.0 %wt of at least one compound which is a C₂-C₄ hydroxyalkyl galactomannan with an average D-mannosyl to D-galactosyl unit ratio different from 2:1 and having C₂-C₄ hydroxyalkyl molar substitution from about 0.7 to about 3.

2. Dry composition according to claim 1 in which the hydroxyalkyl galactomannan is a hydroxypropyl galactomannan.

3. Dry composition according to claim 1 or 2 in which the hydroxyalkyl galactomannan comprises linear or branched C₆-C₂₂ alkyl chains.

4. Dry composition according to claim 3 in which the hydroxyalkyl galactomannan comprises unsubstituted linear or branched C₆-C₈ alkyl chains with alkyl degree of substitution from 0.005 to 0.10.

5. Dry composition according to claim 4 wherein the hydroxyalkyl galactomannan is a 2-hydroxypropyl-2-hydroxy-3-(2-ethylhexyloxy) propyl galactomannan.

6. Dry composition according to any of claims from 1 to 5 wherein the hydraulic binder is cement and/or gypsum.

7. Dry composition according to claim 6 wherein the hydraulic binder is Portland cement or a Portland cement blend.

8. Dry composition according to claim 6 wherein the hydraulic binder is gypsum in the form of calcium sulphate hemihydrate.

9. 2-Hydroxypropyl-2-hydroxy-3-(2-ethylhexyloxy) propyl galactomannan with an average D-mannosyl to D-galactosyl unit ratio different from 2:1, having hydroxyalkyl molar substitution from 0.7 to 3.0 and alkyl degree of substitution from 0.005 to 0.10.

10. Hydraulic binder paste prepared by admixing a dry composition according to any of the claims from 1 to 8 with an amount of water of from about 10 to about 85 parts by weight for 100 parts by weight of the dry composition.

## Patentansprüche

1. Trockenzusammensetzung, umfassend ein hydraulisches Bindemittel und zwischen 0,05 und 2,0 Gew.-% wenigstens einer Verbindung, die ein C₂-C₄-Hydroxyalkylgalactomannan mit einem durchschnittlichen Verhältnis von D-Mannosyl- zu D-Galactosyl-Einheiten ist, das sich von 2:1 unterscheidet und das eine molare Substitution von C₂-C₄-Hydroxyalkyl zwischen etwa 0,7 und etwa 3 aufweist.

2. Trockenzusammensetzung nach Anspruch 1, wobei das Hydroxyalkylgalactomannan ein Hydroxypropylgalactomannan ist.

3. Trockenzusammensetzung nach Anspruch 1 oder 2, wobei das Hydroxyalkylgalactomannan lineare oder verzweigte C₆-C₂₂-Alkylketten umfasst.

4. Trockenzusammensetzung nach Anspruch 3, wobei das Hydroxyalkylgalactomannan unsubstituierte lineare oder verzweigte C₆-C₈-Alkylketten mit einem Alkyl-Substitutionsgrad zwischen 0,005 und 0,10 umfasst.

5. Trockenzusammensetzung nach Anspruch 4, wobei das Hydroxyalkylgalactomannan ein 2-Hydroxypropyl-2-hydroxy-3-(2-ethylhexyloxy)propylgalacto-mannan ist.

6. Trockenzusammensetzung nach einem der Ansprüche 1 bis 5, wobei das hydraulische Bindemittel Zement und/oder Gips ist.

7. Trockenzusammensetzung nach Anspruch 6, wobei das hydraulische Bindemittel Portlandzement oder eine Portlandzementmischung ist.

8. Trockenzusammensetzung nach Anspruch 6, wobei das hydraulische Bindemittel Gips in Form von Calciumsulfat-Halbhydrat ist.

9. 2-Hydroxypropyl-2-hydroxy-3-(2-ethylhexyloxy)propylgalactomannan mit einem durchschnittlichen Verhältnis von D-Mannosyl- zu D-Galactosyl-Einheiten, das sich von 2:1 unterscheidet, mit einer molaren Substitution von Hydroxyalkyl zwischen 0,7 und 3,0 und einem Alkyl-Substitutionsgrad zwischen 0,005 und 0,10.

10. Hydraulische Bindemittelpaste, hergestellt durch Mischen einer Trockenzusammensetzung nach einem der Ansprüche von 1 bis 8 mit einer Wassermenge zwischen etwa 10 und etwa 85 Gewichtsteilen pro 100 Gewichtsteile der Trockenmasse.

## Revendications

1. Composition sèche comprenant un liant hydraulique et de 0,05 à 2,0 % en poids d'au moins un composé qui est un hydroxyalkylgalactomannane en C₂-C₄ ayant un rapport moyen des motifs D-mannosyle à D-galactosyle différent de 2:1 et comportant une substitution molaire d'hydroxyalkyle en C₂-C₄ d'environ 0,7 à environ 3.

2. Composition sèche selon la revendication 1 dans laquelle l'hydroxyalkylgalactomannane est un hydroxypropylgalactomannane.

3. Composition sèche selon la revendication 1 ou 2 dans laquelle l'hydroxyalkylgalactomannane comprend des chaînes alkyle en C₆-C₂₂ linéaires ou ramifiées.

4. Composition sèche selon la revendication 3 dans laquelle l'hydroxyalkylgalactomannane comprend des chaînes alkyle en C₆-C₈ linéaires ou ramifiées non substituées ayant un degré de substitution d'alkyle de 0,005 à 0,10.

5. Composition sèche selon la revendication 4 dans laquelle l'hydroxyalkylgalactomannane est un 2-hydroxypropyl-2-hydroxy-3-(2-éthylhexyloxy)propylgalactomannane.

6. Composition sèche selon l'une quelconque des revendications 1 à 5 dans laquelle le liant hydraulique est le ciment et/ou le gypse.

7. Composition sèche selon la revendication 6 dans laquelle le liant hydraulique est le ciment Portland ou un mélange à base de ciment Portland.

8. Composition sèche selon la revendication 6 dans laquelle le liant hydraulique est le gypse sous forme d'hémihydrate de sulfate de calcium.

9. 2-hydroxypropyl-2-hydroxy-3-(2-éthylhexyloxy)propylgalactomannane ayant un rapport moyen des motifs D-mannosyle à D-galactosyle différent de 2:1, comportant une substitution molaire d'hydroxyalkyle de 0,7 à 3,0 et un degré de substitution d'alkyle de 0,005 à 0,10.

10. Pâte de liant hydraulique préparée par mélange d'une composition sèche selon l'une quelconque des revendications 1 à 8 avec une quantité d'eau d'environ 10 à environ 85 parties en poids pour 100 parties en poids de la composition sèche.
